(19) Europäisches Patentamt / European Patent Office / Office européen des brevets

(11) **EP 3 637 303 B1**

(12) **EUROPEAN PATENT SPECIFICATION**

(45) Date of publication and mention of the grant of the patent:
**14.02.2024 Bulletin 2024/07**

(21) Application number: **18306335.3**

(22) Date of filing: **09.10.2018**

(51) International Patent Classification (IPC):
**G06F 18/2413** *(2023.01)*     **G06F 18/2433** *(2023.01)*
**G06V 10/764** *(2022.01)*     **G06V 10/44** *(2022.01)*
**G06V 10/772** *(2022.01)*     **G06V 10/774** *(2022.01)*
**G06V 10/82** *(2022.01)*     **G06V 20/10** *(2022.01)*
**G06V 20/62** *(2022.01)*

(52) Cooperative Patent Classification (CPC):
**G06V 20/10; G06F 18/2413; G06F 18/2433;
G06V 10/454; G06V 10/764; G06V 10/772;
G06V 10/774; G06V 10/82; G06V 20/63**

(54) **METHODS FOR GENERATING A BASE OF TRAINING IMAGES, FOR TRAINING A CNN AND FOR DETECTING A POI CHANGE IN A PAIR OF INPUTTED POI IMAGES USING SAID CNN**

VERFAHREN ZUR ERZEUGUNG EINER BASIS VON TRAININGSBILDERN ZUM TRAINING EINES CNN UND ZUR DETEKTION EINER POI-VERÄNDERUNG IN EINEM PAAR VON EINGEGEBENEN POI-NACHRICHTEN UNTER VERWENDUNG VON BESAGTEM CNN

PROCÉDÉS DE GÉNÉRATION D'UNE BASE D'IMAGES DE FORMATION, POUR ENTRAÎNER UN CNN ET DE DÉTECTION D'UN CHANGEMENT DE POI DANS UNE PAIRE D'IMAGES D'ENTRÉE POI UTILISANT LEDIT CNN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.04.2020 Bulletin 2020/16**

(73) Proprietor: **Naver Corporation**
**Seongnam-si, Gyeonggi-do (KR)**

(72) Inventors:
• **REVAUD, Jérôme**
**38240 MEYLAN (FR)**
• **SAMPAIO DE REZENDE, Rafael**
**38000 GRENOBLE (FR)**

(74) Representative: **Regimbeau**
**20, rue de Chazelles**
**75847 Paris Cedex 17 (FR)**

(56) References cited:
**US-B1- 10 007 863**

• **GUPTA ANKUSH ET AL: "Synthetic Data for Text Localisation in Natural Images", 2016 IEEE CONFERENCE ON COMPUTER VISION AND PATTERN RECOGNITION (CVPR), IEEE, 27 June 2016 (2016-06-27), pages 2315-2324, XP033021410, DOI: 10.1109/CVPR.2016.254 [retrieved on 2016-12-09]**
• **SHUN ZHANG ET AL: "Tracking Persons-of-Interest via Unsupervised Representation Adaptation", ARXIV.ORG, CORNELL UNIVERSITY LIBRARY, 201 OLIN LIBRARY CORNELL UNIVERSITY ITHACA, NY 14853, 5 October 2017 (2017-10-05), XP080826471,**
• **DWIBEDI DEBIDATTA ET AL: "Cut, Paste and Learn: Surprisingly Easy Synthesis for Instance Detection", 2017 IEEE INTERNATIONAL CONFERENCE ON COMPUTER VISION (ICCV), IEEE, 22 October 2017 (2017-10-22), pages 1310-1319, XP033282989, DOI: 10.1109/ICCV.2017.146 [retrieved on 2017-12-22]**
• **MAX JADERBERG ET AL: "Synthetic Data and Artificial Neural Networks for Natural Scene Text Recognition", CORR (ARXIV), vol. abs/1406.2227v4, 9 December 2014 (2014-12-09), pages 1-10, XP055308751,**

- **BJORKLUND TOMAS ET AL: "Automatic license plate recognition with convolutional neural networks trained on synthetic data", 2017 IEEE 19TH INTERNATIONAL WORKSHOP ON MULTIMEDIA SIGNAL PROCESSING (MMSP), IEEE, 16 October 2017 (2017-10-16), pages 1-6, XP033271592, DOI: 10.1109/MMSP.2017.8122260 [retrieved on 2017-11-27]**
- **MCLAUGHLIN NIALL ET AL: "Data-augmentation for reducing dataset bias in person re-identification", 2015 12TH IEEE INTERNATIONAL CONFERENCE ON ADVANCED VIDEO AND SIGNAL BASED SURVEILLANCE (AVSS), IEEE, 25 August 2015 (2015-08-25), pages 1-6, XP032795969, DOI: 10.1109/AVSS.2015.7301739 [retrieved on 2015-10-19]**

## Description

FIELD OF THE INVENTION

The field of this invention is that of machine learning.

More particularly, the invention relates to methods for training a convolutional neural network for detecting a change of Point Of Interest, and for using such convolutional neural network.

BACKGROUND OF THE INVENTION

Computer vision is a recent field of endeavor which aims at providing computers with high-level understanding from digital videos. It seeks to automate tasks that the human visual system can do.

Recent successes include for example retrieving specific landmarks from a large photo dataset (see the document Albert Gordo, Jon Almazán, Jerome Revaud, and Diane Larlus. End-to-end learning of deep visual representations for image retrieval. International Journal of Computer Vision, 124(2):237-254, September 2017) or identifying individuals in camera surveillance networks.

In particular, it has been proposed to use Convolutional Neural Networks (CNNs) to this end. They are a type of Neural Networks wherein the connection pattern between the neurons is inspired by the visual cortex of animals. They are thus especially suitable for video processing; in particular, they allow for the efficient recognition of entities in images.

Thus, after a supervised learning stage wherein a CNN is trained by feeding it a training set of annotated images, i.e. wherein landmarks have already been labelled, the CNN is able to process on its own some inputted "fresh" images (i.e., images that were not in the set of images used to train the CNN).

Point Of Interests (POIs) are well-localized geographic landmarks that someone or something (e.g., an autonomous vehicle) may find useful or interesting. Typical examples of POIs are shops or stores of all kinds, which includes restaurants, cafes, banks, etc.

While computer vision techniques can be used to automatically recognize POIs as explained, it should be interesting, in addition, to be able to perform the counterpart task, i.e. automatically determining, for each POI in a given area, whether it has changed or not over a period of time (i.e. replaced by another POI), given two datasets of geo-localized photos, captured at two different time-stamps.

Indeed, POI change detection is a key component of mapping initiatives which could enable to semi-automatically maintain up-to-date a database of POIs by monitoring geo-localized photos over time.

An example scenario would be that a device (manned or unmanned, e.g. car, trolley, robot) captures on a regular basis photos of the surroundings in a specific area (for example using a 360-degree camera and spanning the area). The capturing device would have some localization abilities (e.g., a LIDAR) that would enable associating each photo with a 6-degrees-of-freedom (6DoF) pose. Alternatively, the 6DoF image poses could be recovered using automatic 3D (three dimensional) reconstruction techniques such as proposed in the document Pierre Moulon, Pascal Monasse, and Renaud Marlet. Global fusion of relative motions for robust, accurate and scalable structure from motion. In Proceedings of the IEEE International Conference on Computer Vision, 12 2013.

However, while so-called "ranking-based" approaches (as proposed by the already cited document Albert Gordo, Jon Almazán, Jerome Revaud, and Diane Larlus. End-to-end learning of deep visual representations for image retrieval. International Journal of Computer Vision, 124(2):237-254, September 2017) have been shown to identify whether two instances are the same (or equivalently, different), detecting changes in POI is challenging due to the fact that the appearance of POIs can vary tremendously as time passes by. This is due to weather/lighting conditions, viewpoint changes, occlusions (by cars, trees, people, etc.), seasonal changes of the shop front (Christmas, special sales), etc. One more challenge is due to the inherent difficulty to gather actual examples of POI changes, as they rarely occur in practice: the ranking approaches can be effectively trained at the condition that appropriate training data is available in sufficient quantity.

As of today, change detection can only be performed efficiently for some specific fields such as satellite imaging or medical imaging, wherein "anchor images" may be used to which all candidate images can be compared (see for instance the document *Miriam Cha, Rhonda D. Phillips, Patrick J. Wolfe, and Christ D. Richmond. Combined intensity and coherent change detection in images),* which is not possible for POIs images.

GUPTA ANKUSH ET AL: "Synthetic Data for Text Localisation in Natural Images",2016 IEEE CONFERENCE ON COMPUTER VISION AND PATTERN RECOGNITION (CVPR), IEEE, 27 June 2016, discloses the generation of synthetic images of text in random backgrounds for training a text/logo detection neural network in natural text scenes. It does not teach the generation of synthetic images by replacing a POI logo with another one from the same dataset of training images. US10 007863B1 (PEREIRA JOSE PIO [US] ET AL) 26 June 2018, teaches the generation of synthetic logo images by placing various logos on random backgrounds. Same as GUPTA ANKUSH ET AL, it does not teach the generation of synthetic images by replacing a POI logo with another one from the same dataset of training images.

There is a consequently need for a new method for detecting POI changes reliably and without restriction.

SUMMARY OF THE INVENTION

The invention provides a method for training a convolutional neural network, CNN, for detecting a Point Of Interest, POI, change in a pair of inputted POI images as defined by claim 1.

Preferred but non limiting features of the present invention are defined by dependent claims 2 to 8.

The invention also provides a method for detecting a Point Of Interest, POI, change in a pair of inputted POI images, as defined by claim 9.

Preferred but non limiting features of the present invention are defined in dependent claims 10 and 11.

According to another aspects, the invention provides a computer program product, comprising code instructions for executing a method according to the invention for training a convolutional neural network, CNN, or for detecting a Point Of Interest, POI, change in a pair of inputted POI images; and a computer-readable medium, on which is stored a computer program product comprising code instructions for executing a method according to invention for training a convolutional neural network, CNN, or for detecting a Point Of Interest, POI, change in a pair of inputted POI images.

BRIEF DESCRIPTION OF THE DRAWINGS

The above and other objects, features and advantages of this invention will be apparent in the following detailed description of an illustrative embodiment thereof, which is to be read in connection with the accompanying drawings wherein:

- figure 1 represents examples of comparisons of POI images showing a change of POI or not;
- figure 2 illustrates an example of architecture in which the method according to the invention is performed;
- figure 3 represents an example of a CNN architecture for use in the methods according to the invention;
- figure 4a represents an example of actual POI change that is particularly hard to detect;
- figure 4b represents examples of synthetic POI images and the corresponding original POI images;
- figures 5a-5c represent three examples of problematic candidate POI images;
- figure 6 illustrates how a geometric overlap is computed between two images;
- figures 7a-7b represents two tests for assessing the performance of the methods according to the invention.

DETAILED DESCRIPTION OF A PREFERRED EMBODIMENT

*Architecture*

According to three complementary aspects of the present invention are proposed:

- a method for generating a base of training images for training a convolutional neural network (CNN) for detecting a Point Of Interest (POI) change in a pair of inputted POI images;
- a method for training a CNN for detecting a POI change in a pair of inputted POI images, advantageously from a base generated according to the first method;
- a method for detecting a POI change in a pair of inputted POI images using a CNN, advantageously trained according to the second method.

As explained, by "Point Of Interest", it is meant a well-localized geographic landmark that someone or something may find useful or interesting. Typical examples of POIs are shops or stores of all kinds, which includes restaurants, cafes, banks, etc., but the concept of POI could be generalized to any occupancy of any premises: further examples of POIs include public buildings, hospitals, schools, churches, parking lots, police stations, fire stations, train stations, airports, etc.

Generally, speaking, the POIs are all the "spots" that can be marked in a map, in particular a "web map", i.e. a map provided on client equipment 10 such as a mobile device (e.g., smartphone, tablet, laptop, etc.) or an embedded or less mobile device (e.g., a car computer, a desktop, a display or projection unit, etc.) using an application. Indeed, web maps are associated with a database of POIs for displaying on the map following the user requests.

More generally, depending on the context a POI is used, a POI may identify features that may or may not be of interest (e.g., when traveling, the following POIs may be of interest: refueling stations, car parks, restaurants, etc.), whether appearing outside a structure (e.g., a tourist attraction, government buildings, etc.) or inside a structure (e.g., POIs may identify the location of art within a museum or the location of facilities).

Each POI is as explained associated to a particular location (typically a building), so that an image of this location depicts the POI.

A "POI change" is then the replacement of a POI at a particular location by another one (regardless of the reason) during a given period defined by a pair of inputted images.

These images are assumed to capture the same location at two different time-stamps (thereby defining the time period) and are respectively denoted as "Before-image" and "After-image". For instance, if at the same location the Before-image depicts a bank while the After-image depicts a fast food restaurant, there is a POI change from bank to restaurant.

The purpose of the present methods is to detect the occurrence of a change (in other words, the output of the method is a Boolean). If a change has been detected, a further POI detector could be triggered to determine the "new" POI.

This method can be used at a large scale for automatically determining, for each POI in a given area, if it has changed or not over the period of time. In other words, the POI change detection method can be performed for a plurality of pair of inputted images, obtained from two given datasets of geolocated photos (for instance acquired using a car roaming the area). These datasets are thus assumed to have been captured at two different time-stamps and are respectively denoted as "Before-dataset" (set of "Before-images") and "After-dataset" (set of "After-images").

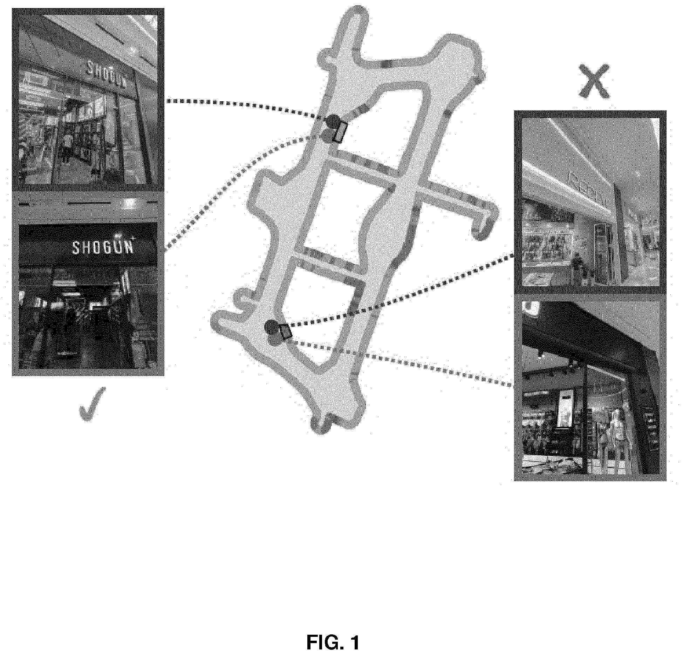

In the example of **Figure 1,** the map represents an area, where two locations are checked for POI change: on the left, it can be seen that there is no POI change at a first location, while on the right it can be seen that there is a POI change at a second location.

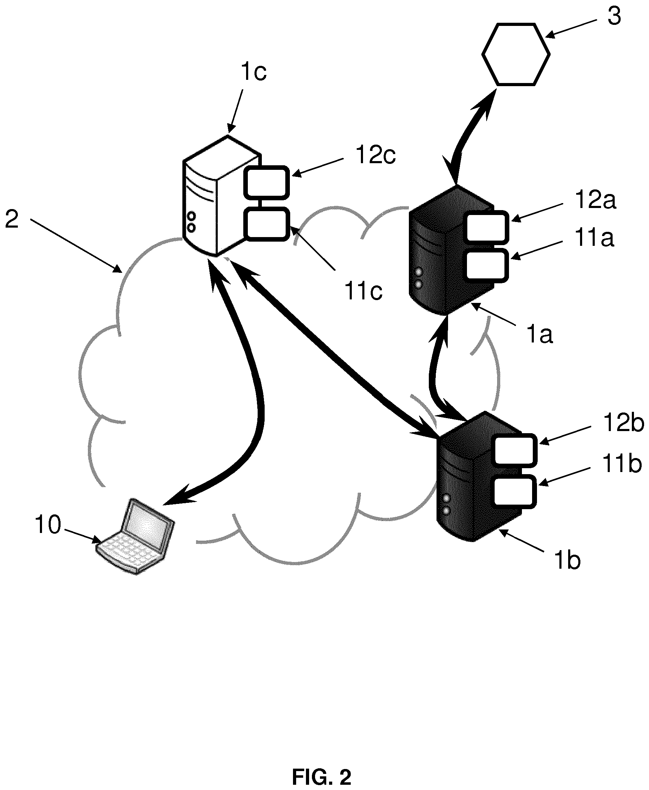

The above mentioned three types of methods are implemented within an architecture such as illustrated in **Figure 2,** by means of a first and/or second and/or third server 1a, 1b, 1c. The first server 1a is a base generation server (implementing the first method), the second server 1b is a learning server (implementing the second method) and the third server 1c is a POI change detection server (implementing the third method). It is fully possible that at least two (in particular the first server 1a and the second server 1b), or even all the three, servers be merged.

Each of these servers 1a, 1b, 1c is typically remote computer equipment connected to an extended network 2 such as the Internet for data exchange. Each one comprises data processing means 11a, 11b, 11c of processor type (in particular the data processor 11b of the second server has strong computing power, since learning is long and complex compared with ordinary use of a trained CNN), and optionally storage means 12a, 12b, 12c such as a computer memory e.g. a hard disk.

The first and second server 1a, 1b store or have access to a training base i.e. a base of training images, named "POI images". Each POI image is already associated to a label (or a "tag") which allows to determine if two POI images are "related" (i.e. likely to depict the same POI) or "unrelated" (i.e. unlikely to depict the same POI). In a first embodiment, the label directly identifies a POI depicted by the image. In other words, it is known for each POI image of the training base which POI is depicted by this image. For example, an image of a restaurant can be associated to a label which is the name of the restaurant. In a second embodiment, each POI image is simply labelled with position and/or orientation data (i.e. the label defines a position and/or an orientation of the image), in particular a 6D pose (i.e. 3 components of the position and 3 components of the orientation). In such a case, two POI images are deemed related if their position/orientation are compatible (typically if the camera has a similar viewpoint when acquiring the images). The present methods are not limited to any labelling scheme: the labels could be of any nature, as long as they bring information about the depicted POI and allow to determine whether two POI images are related or not.

The architecture may further comprise:

- an image acquisition device 3, such as a car with a camera and advantageously a geolocation unit (such as a GPS module, a LIDAR, etc.) for determining the position and/or the orientation of each acquired image, preferably according to six degrees of freedom (6D pose).
- one or more items of client equipment 10, which may be any user terminal (also connected to network 2), preferably separate from the servers 1a, 1b, 1c, but possibly being merged with one and/or the other thereof, for accessing to the POI information. For instance, the client equipment 10 may implement a mapping application displaying POIs on a map.

*Siamese NN*

In one embodiment that focuses on store fronts, the most naive approach for POI change detection would be to first detect POIs in images and then to recognize the franchise they belong to (i.e. a change occurred if the franchise has changed). Compared to the naive approach, the present solution does not require any POI detector nor any explicit knowledge about POI franchises. In other words, the proposed approach can detect a POI change of a storefront even if the corresponding franchises (before and after) have never been seen during training.

The POI change detection problem can be casted into a ranking problem. A ranking approach aims to predict, given an input query, the rank of the all database elements with respect to this query in term of similarity. The similarity is typically defined according to the task at hand (i.e. arbitrarily).

The similarity is typically learned from exemplar pairs of similar/dissimilar instances (an instance being a POI in the present case). While ranking approaches only seem to solve the "identification" problem (i.e. to find instances most similar to the query in the dataset), they can advantageously be used as well to verify the similarity of two instances, i.e., check whether they are similar or not. Basically, if they are not similar while they were supposed to be, then there is a change.

One way of training a ranking system is by using a triplet loss. In the present invention, a particular form of ranking loss based on image triplets is proposed. The goal is to explicitly enforce that, given a triplet composed of a query image, a "relevant" image (i.e. an image related to the query image, i.e. of the same instance), and an "irrelevant" image (i.e. an image unrelated to the query), the trained representation of the relevant image is closer to the representation of the query than the representation of the irrelevant one.

To rephrase in the context of POIs, there is no change if, given a triplet composed of an After-image, a Before-image, and image of another POI (a random POI image associated with a label incompatible with that of the Before-Image, i.e. unrelated and depicting another different POI), the trained representation of the After-image image is closer to the representation of the Before-image than the representation of the third party one.

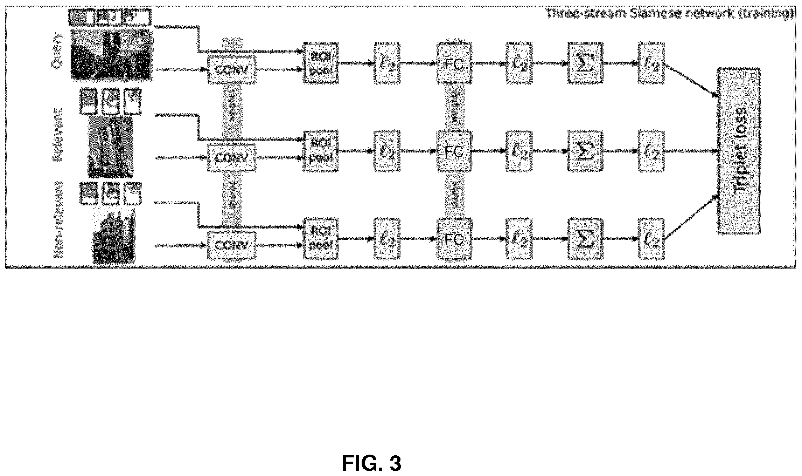

To that aim the CNN used for the present method is preferably a three-stream Siamese neural network, where the image representation produced by each of the three streams are jointly considered by the loss. An embodiment of such Siamese NN for POI change detection is represented by **Figure 3.**

A "Siamese" NN is a type of neural network architecture that contains two or more identical subnetworks, called the streams (e.g., Figure 3 shows an example with three streams). "Identical" means they have the same configuration with the same parameters and weights. Parameter updating is mirrored across all streams.

The weights of the convolutional filters (layer CONV) and of the fully-connected layer (FC) are shared between the streams as their size is independent of the size of the images. This means that the Siamese architecture can process images of any sizes and aspect ratios, and can be trained using images at the same (high) resolution that is used at test time.

A typical ResNet-101 can be used as backbone of each stream with a global pooling layer based on generalized maxpooling.

The FC layer outputs a "descriptor", i.e. a representation vector, on the basis of which two inputs can be compared. It is to be understood that as the streams have the same configuration, given an input the descriptor obtained is the same whatever the stream.

The part of the Siamese NN after the FC layers is just for computing a loss and used only during training. The following ranking loss can be used for training:
Let $I_q$ be a query image with descriptor $d_q$, $I_+$ be a relevant image with descriptor $d_+$, and $I_-$ be an irrelevant image with descriptor $d_-$. The "ranking triplet loss" is thus defined as $L(I_q, I_+, I_-) = \max (0, m + \|d_q - d_+\|^2 - \|d_q - d_-\|^2)$, where m is a scalar that controls the margin.

It is to be understood that other loss functions are possible, and in particular, other distance functions than L2 norm can be used.

The three-stream Siamese NN can be trained with triplets $(I_a, I_b, I_c)$ where $I_a$ and $I_b$ shows the same instance (i.e., depicting the same POI location) and $I_c$ shows a different one (i.e., depicting a different POI location). Following formula for triplet loss, this explicitly enforces the fact that, whatever the instance is, the distance between descriptors $d_a$ and $d_b$ must always be less than the distance between $d_a$ and $d_c$. If this relation holds for any triplet, then it means that in general images from the same instance are closer in space than images from different instances. In other words, measuring the distance between two image descriptors tells about the relation between the two instances:

$$change(I_a, I_a) = \begin{cases} no\ if \|d_a - d_b\| \leq \tau \\ yes\ otherwise \end{cases}$$

wherein $\tau$ is a predetermined threshold (see after).

Base *generation method*

In a first aspect, there is proposed a method for generating a base of training images, implemented by the data processor 11a of the first server 1a. Said method sets the training base for training the CNN (in particular of the three-stream Siamese type).

The general setup to train a Siamese network is to create a dataset of images with a single instance per image (i.e. depicting a single POI) and associated label. It corresponds to the first embodiment of training base as previously mentioned: each label identifies the POI depicted by the image. Generating triplets is then trivial. Let the label of an image $I_a$ be denoted as $l_a$. A necessary and sufficient condition to generate a triplet $(I_a, I_b, I_c)$ is to enforce that $l_a = l_b$ and $l_a \neq l_c$.

Ideally, training a network for POI change would require an infinite dataset of actual pairs of POI images, among which some with POI change and some without change, and would randomly sample them to form proper triplets. In practice, gathering such a dataset is unfeasible.

And directly generating triplets $(I_a, I_b, I_c)$ simulating change and no-change pairs has two flaws:

- it may be unable to learn sufficient invariance against visual clutter that is not a change: e.g. weather, occlusions or seasonal store-fronts changes. Essentially the cause being the limited data that can never represent the full panel of variations.
- it only simulates exemplar pairs of POI changes. Instead of providing an exemplar of two images of the same place showing an actual POI change, it yields two POIs from different places. In reality, however, there is often a certain similarity or correlation between the POI "before" and the one "after", as shown in Figure 1 on the right. In this case, we can see that the actual POI change is rather slim.

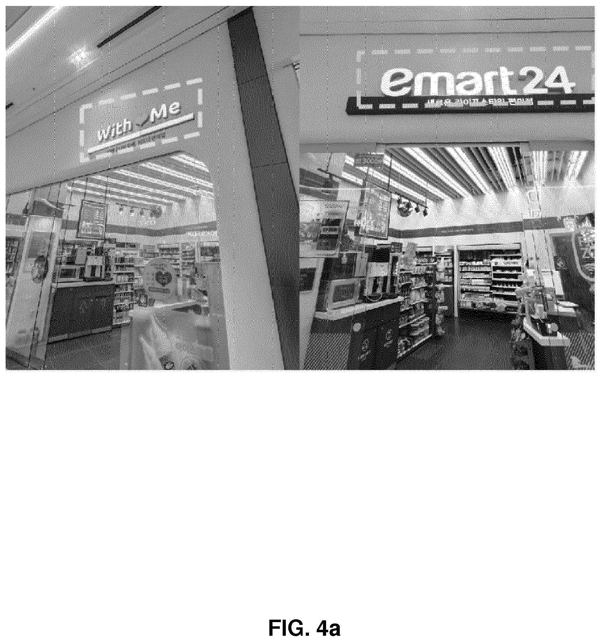

To cope with these issues, the present invention proposes to discriminate what constitutes the visual identity of an instance - called the "key visual feature". In the case of POIs, different shops can sell the same products or services, so the store-front itself is not so discriminative. In particular the only thing that can unequivocally differentiate two POI is this key visual feature, which is a name and/or a logo of the POI (other visual identity features can be used such as a tridimensional emblem, a particular pattern, specific furniture, etc.). Such key visual feature is usually well identified in the image and easy to isolate. For instance, **figure 4a** the shows an example of an actual POI change that is particularly hard to detect: the shop owner (franchise) has changed, but the store content stayed the same. Only the key visual feature has changed, and not in a very distinctive way.

The key visual feature as appearing on POI images of store fronts is called the "signage", and the corresponding part of the POI image is referred to as the "signage region".

The present invention stately proposes to generate artificial examples of POI changes by synthetically swapping the signage region by another one, using image blending techniques for more realism, so as to augment the training base.

The base generating method starts with a step (a1) of obtaining an initial set of POI images each associated to a label. The label could either directly identify a POI depicted by the image, or define a position and/or an orientation of the image. Both embodiments will be explained later, in any case various techniques can be used for obtaining such initial set.

If the labels identify the POIs, it is assumed that at this point each image of the initial set depicts a single POI which is correctly labelled.

Then, in a step (a2), for each image from a subset of said initial set (preferably, each image of the initial set, i.e. the subset is the whole initial set), a signage region is identified in said image, said signage region depicting as explained a key visual feature of a POI depicted by the image - in particular identified by the label associated to the image - typically a name and/or a logo. The signage region can be identified in an image for instance using Optical Character Recognition and/or logo detection (see for instance the document Jérôme Revaud, Matthijs Douze, and Cordelia Schmid. Correlation-Based Burstiness for Logo Retrieval. InMM 2012 - ACM International Conference on Multimedia, 2012).

When identified, the signage region can be cropped so as to obtain a "signage image", that is a small image limited to the signage region. It to be noted that this step (a2) may thus comprise obtaining a collection of cropped signage images from the different images.

In a further step (a3) at least one "synthetic" POI image is generated. Such synthetic POI image is an artificial, made-up, training image corresponding to a first image of said subset wherein the signage region has been replaced by that of second image of said subset. In other words, given a genuine POI image (the first image), the signage region of this image is replaced by another signage region (that of a second image), in particular randomly chosen from the collection.

It is to be noted that step (a3) preferably comprises affine warping of the chosen cropped signage image for adaptation to size and shape of the signage region of the given image, and then Poisson blending for more realism (see for instance the document M. Afifi and K. F. Hussain. Mpb: A modified poisson blending technique. In SIGGRAPH, 2003).

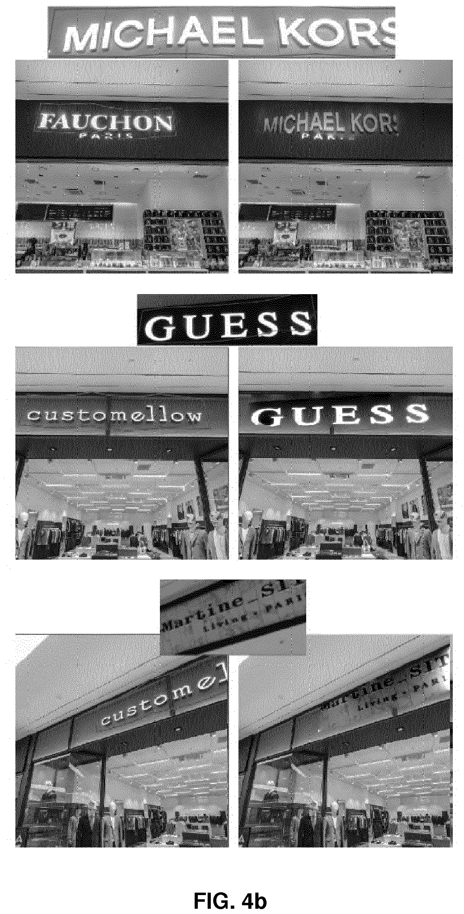

Examples of generated synthetic POI images are shown in **Figure 4b**. For each example, left image is the original one (the first image), top is the cropped signage region chosen (from the second image), and right image is the synthetic POI image obtained.

For use in training, said synthetic POI image has to be labeled, i.e. associated to the label of the second image: indeed, such synthetic image is considered as depicting the POI of the cropped signage region.

Thus, the original image and the synthetic one constitutes a new dissimilar pair that can be added to the training base.

In other words, in a final step (a4), a final set of POI images comprising the initial set of POI images and each generated synthetic POI image is provided is providing as the base of training images (on which the training can be performed).

This procedure can be run multiple times for each POI image having visible signage. Synthetic data generation allows injecting a-priori knowledge in a simple way, making the approach robust to scarce data.

As it will be shown later, excellent results are obtained with up to 50% of synthetic images in the base (i.e. nearly one POI synthetic image per original POI image). In particular, the rate of synthetic POI images in the training base can range from 4% to 80%, preferably from 10% to 70%, preferably from 20% to 60%, and even more preferably from 40% to 55%.

*POI images labelling*

In the first embodiment, each POI image is associated with a label identifying the POI. In such a case, step (a1) can be performed by manually labelling captured POI images, but that could be cumbersome.

It could be interesting to automatically collect and label images but in practice "ill-formed triplets" are likely to happen. The reason is three-fold:

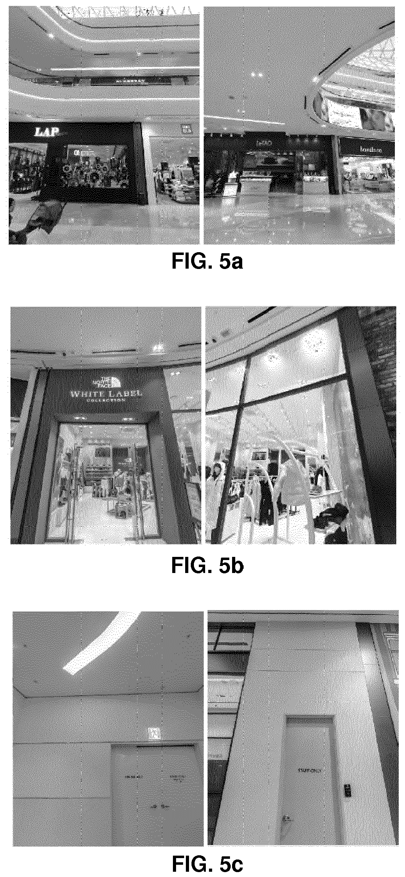

- more than one instance may appear on a photo, see **Figure 5a;**
- a single image can cover very partially a POI, hence two images from the same POI can share no overlap whatsoever, see **Figure 5b;**
- some photos may not show any POI at all, yet a POI image paired with such image does not count as a change, see **Figure 5c.**

In other words, for using reliably labels identifying the POI depicted in each image, it is still necessary to have a human operator which verifies that each POI image depicts a single POI, and which verifies the label themselves.



To solve these drawbacks, the second embodiment can be used wherein each POI image is simply labelled with position and/or orientation data, in particular a 6D pose. The idea is to generate triplets instead based on a geometrical measure of image content overlap: two images are related, if they share a substantially common view, i.e. if they present an overlap.

It is assumed that a map of the area is available. The map only needs to show the outline of the corridors. If unavailable, such poses and map could otherwise be obtained using 3D reconstruction techniques, see for instance the document Pierre Moulon, Pascal Monasse, and Renaud Marlet. Global fusion of relative motions for robust, accurate and scalable structure from motion. In Proceedings of the IEEE International Conference on Computer Vision, 12 2013.

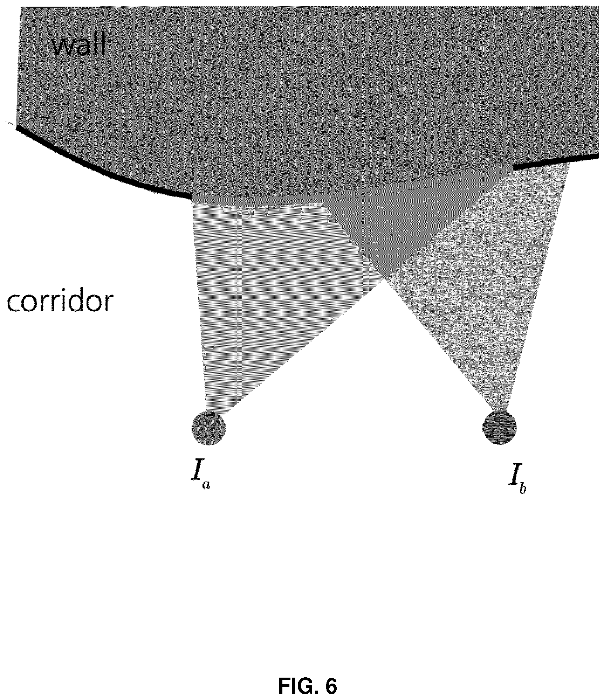

A point belonging to the corridor outlines is denoted as $w \in W$, where $W$ is the set of all such points, see **Figure 6**. For each image $I_a$, a geometric parameter $V_a$ that represents the set of corridor outlines $w \in V_a$ visible in this image can be computed. This is achieved via ray-casting: for each pixel of the image, is casted a 3D ray that starts from the camera lens, pass through this pixel and hit the first $w \in W$ it encounters on its way.

The overlap $O(I_a; I_b)$ between two images $I_a$ and $I_b$ can be computed using the intersection-over-union between their visibility sets:

$$O(I_a; I_b) = \frac{V_a \cap V_b}{V_a \cup V_b}$$

Deciding if two images are related or not is then based on their geometric overlap: two POI images are determined as related (true pair) if they present a geometric overlap over a first threshold ($O(I_a; I_b) > \tau_{high}$) and as non-related (false pair) if they present a geometric overlap below a second threshold ($O(I_a; I_b) \le \tau_{low}$).

The first threshold $\tau_{high}$ is superior or equal to the second threshold $\tau_{low}$. Typical values are $\tau_{high} = 0,5$ (i.e. 50% of overlap) and $\tau_{low} = 0$ (no overlap, i.e. the two images are distinct). It is to be understood that if the geometric overlap between two images is between the thresholds ($\tau_{high} \ge O(I_a; I_b) > \tau_{low}$), then the relation between the two image is uncertain, so that it cannot be determined that there are related or related. In other words, these two images will be not be used in the same triplet.

*Training method*

In a second aspect, there is proposed a training method, implemented by the data processor 11b of the second server 1b. Said method trains the CNN of the three-stream Siamese type, for detecting a POI change.

In a first step (a), the base of training images is generated pursuant to the first aspect so as to be "augmented" thanks to the synthetic images.

It is to be understood that either the first and the second server 1b, 1c are the same equipment, or step (a') comprise the transmission of the base of training POI images from the first server 1a to the second server 1b, for storage in the memory 12b.

In a second step (b), are generated as explained a plurality of triplets of training images, each triplet comprising a pair of related POI images, and a pair of unrelated POI images (i.e. it comprises a third POI image which is unrelated to the two other POI images: one image of the triplet belongs to both the pair of related POI images and the pair of unrelated POI images; in other words, there are three images in a triplet, and it can be understood that the third image of the triplet is unrelated to the first image or the second image of the triplet (which are related), that is, if $I_c$ is the "unrelated image" of the triplet ($I_a$, $I_b$, $I_c$), $I_a$ belongs to both pairs ($I_a$, $I_b$) - the pair of related images - and ($I_a$, $I_c$) - the pair of unrelated images - of the triplet), two POI images being determined as related or not on the basis of their labels. Preferably, at least one triplet comprises as pair of unrelated POI images a synthetic image and the first image from which said synthetic image has been generated. The triplets can be generated randomly as soon as they respect the pairs.

Again, if the labels identify the POI themselves, then two images are related if associated to the same label. Else, if each POI image is associated to a label defining a 6-degrees-of-freedom pose of the image, two POI images being determined as related or not as a function of their geometric overlap, based on their respective 6-degrees-of-freedom pose.

To this end, step (b) may comprise computing the geometric overlap between all image pairs within the base, so as to select triplets respecting the geometric overlap constraints to simulate the change and no-change pairs.

It is to be noted that the 6DoF embodiment requires that the training base is free of actual POI changes: else, there could be a pair of POI images with the same pose but depicting different POIs. Nevertheless, having a base free of POI change is most likely the case because POI changes rarely happen. This is even more likely if the POI images were collected at time-stamps close in time, or even in one session.

In a third step (c), the Siamese NN is trained, using the three images of a triplets as input of the three streams, and the "ranking triplet loss" as loss function. The skilled person can find more details on how to train such a network in the already cited document Albert Gordo, Jon Almazán, Jerome Revaud, and Diane Larlus. End-to-end learning of deep visual representations for image retrieval. International Journal of Computer Vision, 124(2):237-254, September 2017.

In particular, can be used a learning rate of $10^{-5}$ divided by two every 2000 iterations with Adam, a batch size of 16 and performed hard triplet mining every 32 iterations. During hard triplet mining, a pool of 512 images is randomly sampled.

Standard data augmentation techniques (random scaling, color jittering, random rotation, random tilting, random erasing, random crop) can be used with the same parameters for all experiments.

Training a model until convergence typically requires a few thousands of iterations, after what the triplet loss becomes null for all training triplets (and thus training more is ineffective).

*POI change detection method*

In a third aspect, there is proposed a method for detecting a POI change in a pair of inputted POI images implemented by the data processor unit 11c of the second server 1b. In other words, the method according to the third aspect performs the comparison of the inputted POI images using the trained CNN, so as to determine whether a POI change has occurred.

As explained, the images of a pair of inputted POI images have been typically captured at the same location at two different time stamps. In particular, the method may be performed for a plurality of pair of inputted images, obtained from two given datasets of geolocated images captured at two different time stamps (the "Before-dataset" and the "After-dataset"), over a given area. The idea would be to capture on a regular basis photos of the surroundings in a specific area, for instance using the image acquisition device 3.

Image pairs are typically formed according to the image geo-localized meta-data. Specifically, two images $I_a$ and $I_b$ are paired if at least one of them is a close-up picture (i.e. average distance to the corridor outline is below a threshold $\gamma_{dis}$) and their visibility IoU is sufficient: $O(I_a; I_b) > \gamma_{IoU}$, see before how to compute the geometric overlap. For instance, can be used $\gamma_{dis}$ = 8 *meters* and $\gamma_{IoU}$ = 0.5.

At a first step (a'), the training of a CNN of the three-stream Siamese type is performed by the second server 1b. Said training is consistent with the method according to the second aspect, i.e. the Siamese NN is trained based of triplets of POI images comprising a pair of related POI images, and a pair of unrelated POI images.

It is to be understood that either the second and the third server 1b, 1c are the same equipment, or step (a') comprise the transmission of the trained CNN parameters and weights from the second server 1b to the third server 1c, for storage in the memory 12c.

At a second step (b'), the data processor 11b of the second server 1b uses the CNN for evaluation of the inputted images.

To this end, step (b') comprises, for each image of the pair of inputted POI images, the computing of a descriptor of the image using a stream of the CNN. At this stage, only a single stream of the Siamese NN is needed to compute the image descriptor, as all three streams are identical. Preferably, two streams are used so as to compute the two descriptors in parallel.

In a third step (c'), a POI change can be detected based on a similarity score function of the descriptors computed. Indeed, as the similarity score represents a distance between the descriptors, the chances of a POI change are increasing with the score.

On a first embodiment, the similarity score is compared with a predetermined threshold: applying the comparison with the predetermined threshold yields the final result. A POI change is detected if the score is below the predetermined threshold (inputted POI images are different), and no change a POI change is detected if the score is below predetermined threshold (inputted POI images are similar).

In a second embodiment, a loss function such as a sigmoid can be applied to get change probabilities instead of binary labels.

Advantageously, the similarity score is given by the function $S(I_a; I_b) = \langle d_a, d_b \rangle$, i.e. as the dot-product between their descriptor. Other scoring functions are possible, such as norms of the difference.

As explained, the method is advantageously performed for all the POIs over an area, so that spatial aggregation can be used: each corridor outline $w \in W$ receives a POI change score $S_w$, computed as the maximum of scores for all image pairs "seeing" it:

$$S_w = \max_{I_a, I_b \mid w \in V_a \cap V_b} S(I_a; I_b)$$

Finally, corridor outlines scores $\{S_w\}$ are locally smoothed along the corridor outlines using a 1D Gaussian kernel of width for example $\sigma_{sm}$ = 2 *meters.*

POI changes detected over said given area could be ranked by likelihood. These changes could then be notified to a human operator, for reviewing the concerned photos before correspondingly updating the POI database.

In other words, the proposed approach can review a large number of photos (typically, thousands), filter them, and provide to the human operator a summary of what is likely showing a POI change, saving a lot of operator time and improving the operation reliability.

Finally, the result obtained can be provided to said the equipment 10. Using an interactive graphical user interface (GUI), the user can click on the likely change areas to quickly verify the actual image pairs at each location.

Tests

The efficiency of the present method could be evaluated using the standard mean-Average-Precision metric (mAP), which is traditional way of evaluating an instance retrieval system.

Measuring mAP does not exactly align to the POI change detection task; the primary objective is to globally rank all locations in a given area in terms of POI change likelihood.

A geographic ground-truth could therefore be defined by manually associating a location to each ground-truth POI change. At test time, the output of the proposed system (a POI change likelihood at each location) to the geographic ground-truth: all locations close to a ground-truth spot are labeled as "positive" (5 meters radius), otherwise as "negative". Overall, less than 0.75% of all locations are marked as positive. The Average-Precision given this geographic labeling is referred to it as "PCD AP". It reflects the global performance of the proposed framework.

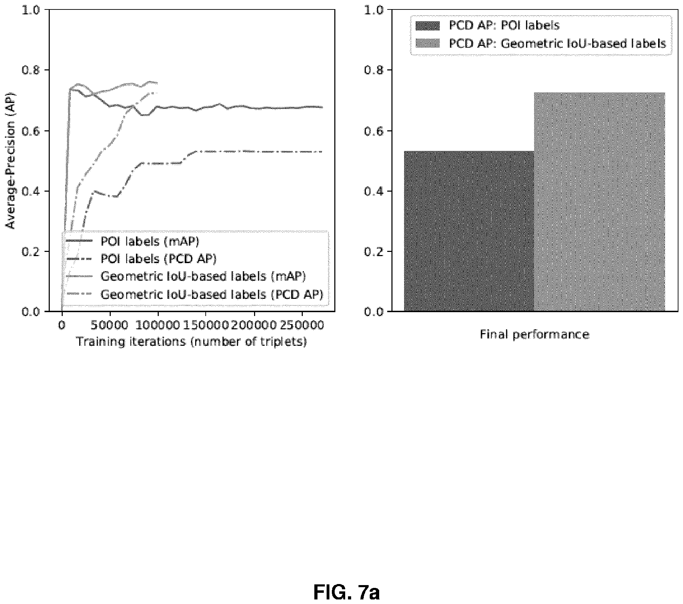

**Figure 7a** represents a first test comparing the performances of the two possible labelling schemes (labels identifying the POI vs. labels defining position and/or orientation of the image). It is clear that the second labelling scheme performs better.

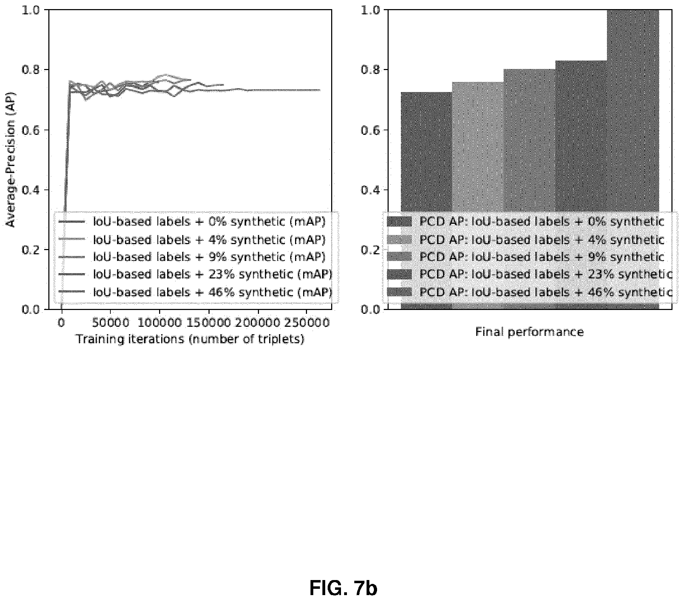

**Figure 7b** represents a second test comparing the performances according to different proportions of synthetic images.

A first observation is that adding synthetic samples makes the training harder and thus last longer, as can be observed in the left plot. Yet it only has a minor effect on the mAP. In other words, it has no influence on the ranking of images. However, synthetic images have a great influence on the PCD AP metric (the more, the better). This is because adding synthetic examples forces the network to focus its attention on the only visual feature that become differentiative: the signage. Activation maps of the last convolutional layer after training shows that the network learns to focus its attention solely on the signage. As a result, it strengthens the distance gap between images with different signage.

As an example, the distance between the two images $I_a$ and $I_b$ shown in Figure 4a is equal to $\|d_a - d_b\| \approx 1.23$ and $\|d_a - d_b\| \approx 0.74$ for a model trained with and without adding synthetic images, respectively.

*Computer program product*

In a third and fourth aspect, the invention concerns a computer program product comprising code instructions to execute a method for training a convolutional neural network, CNN, or a method for detecting a Point Of Interest, POI, change in a pair of inputted POI images; and storage means readable by computer equipment (memory 12a, 12b, 12c of the first, second or third server 1a, 1b, 1c) provided with this computer program product.

*Conclusion*

Although the subject matter has been described with a specific reference to POIs that identify store fronts, with its key visual feature identified as "signage", it will be understood that the subject matter defined in the appended claims is not necessarily limited to the specific features or acts described above. Rather, the specific features and acts described above provide one example form. For example, instead of store fronts, POIs may identify a museum and the key visual features (or signage region) of such POIs may be art within the museum.

## Claims

1. A method for training a convolutional neural network, CNN, for detecting a Point Of Interest, POI, change in a pair of inputted POI images, wherein a POI change corresponds to the replacement of a POI at a particular location by another one over a period of time defined by the pair of inputted POI images; the method comprises the implementation of steps of

    (a) generating, by a data processor (11a) of a first server (1a), a base of training images, wherein said generating comprises:

        (a1) obtaining an initial set of labelled POI images;
        (a2) for each image from a subset of said initial set, identifying a signage region in said image, said signage region depicting a key visual feature of a POI depicted by the image, wherein said key visual feature of a POI is a name and/or a logo of the POI, the signage region being identified using Optical Character Recognition and/or logo detection;
        (a3) generating at least one synthetic POI image corresponding to a first image of said subset wherein the signage region has been replaced by that of
        a second image of said subset, and associating to said synthetic POI image the label of the second image;
        (a4) providing as the base of training images a final set of POI images comprising the initial set of POI images and each generated synthetic POI image;

    (b) generating, by a data processor (11b) of a second server (1b), a plurality of triplets of training images from the base of training images, each triplet comprising a pair of related POI images, and a pair of unrelated POI images, two POI images being determined as related or not on the basis of their labels;
    (c) training, by the data processor (11b) of the second server (1b), from said plurality of triplets, a CNN of the three-stream Siamese type.

2. A method according to claim 1, wherein step (a2) comprises obtaining a collection of cropped signage images, and step (a3) comprises replacing the signage region of the given image using a randomly chosen cropped signage images from said collection of cropped signage images.

3. A method according to claim 2, wherein step (a3) comprises affine warping of the chosen cropped signage image for adaptation to size and shape of the signage region of the given image, and then Poisson blending.

4. A method according to any one of claims 1 to 3, wherein either each POI image is associated to a label identifying the POI depicted by the image, or each POI image is associated to a label defining a position and/or an orientation of the camera.

5. A method according to claim 4, wherein the label defining a position and/or an orientation of the camera is a 6-degrees-of-freedom pose of the camera and wherein step (a1) comprises generating said initial set of POI images by acquiring geo-localized photographs of POIs using an image acquisition device (3).

6. A method according to claim 1, wherein each POI image is associated to a label defining a 6-degrees-of-freedom pose of the camera, two POI images being determined as related if they present a geometric overlap over a first threshold and as non-related if they present a geometric overlap below a second threshold, based on their respective 6-degrees-of-freedom pose of the camera.

7. A method according to claim 6, wherein the geometric overlap between two images is computed as the intersection-over-union between sets of corridor outlines respectively visible in each of the two images.

8. A method according to claims 1 to 7, wherein at least one triplet comprises as pair of unrelated POI images a synthetic image and the first image from which said synthetic image has been generated.

9. A method for detecting a Point Of Interest, POI, change in a pair of inputted POI images, wherein a POI change corresponds to the replacement of a POI at a particular location by another one over a period of time defined by the pair of inputted POI images, the method comprises the implementation of steps of:

    (b') computing, by the data processor (11c) of a third server (1c), for each image of the pair of inputted POI images, a descriptor of the image using a stream of the CNN of the three stream Siamese type trained by the method according to any one of claims 1 to 8;
    (c') detecting, by the data processor (11c) of the third server (1c), a POI change based on a similarity score function of the descriptors computed.

10. The method according to claim 9, wherein the images of a pair of inputted POI images capture the same location at two different time stamps.

11. The method according to claim 10, performed for a plurality of pair of inputted images, obtained from two given datasets of geolocated images captured at two different time stamps, over a given area.

12. Computer program product comprising code instructions to execute a method according to one of claims 1 to 11 for training a convolutional neural network, CNN, or for detecting a Point Of Interest, POI, change in a pair of inputted POI images, when said program is executed on a computer.

13. A computer-readable medium, on which is stored a computer program product comprising code instructions for executing a method according to any one of claims 1 to 11 for training a convolutional neural network, CNN, or for detecting a Point Of Interest, POI, change in a pair of inputted POI images.

**Patentansprüche**

1. Verfahren zum Trainieren eines neuronalen Faltungsnetzwerks, CNN, zum Erkennen eines Interessenpunkts, POI, in einem Paar eingegebener POI-Bilder, wobei eine POI-Änderung dem Ersetzen eines POI an einer bestimmten Stelle durch einen anderen über einen durch das Paar eingegebener POI-Bilder definierten Zeitraum entspricht; das Verfahren umfasst die Umsetzung der folgenden Schritte:

    (a) Erzeugen einer Basis von Trainingsbildern durch einen Datenprozessor (11a) eines ersten Servers (1a), wobei das Erzeugen Folgendes umfasst:

        (a1) Erhalten eines anfänglichen Satzes von beschrifteten POI-Bildern;
        (a2) für jedes Bild aus einem Untersatz des anfänglichen Satzes, Identifizieren einer Beschilderungsregion in dem Bild, wobei die Beschilderungsregion ein visuelles Schlüsselmerkmal eines durch das Bild dargestellten POI darstellt, wobei das visuelle Schlüsselmerkmal eines POI ein Name und/oder ein Logo des POI ist, wobei die Beschilderungsregion unter Verwendung von optischer Zeichenerkennung und/oder Logoerkennung identifiziert wird;
        (a3) Erzeugen mindestens eines synthetischen POI-Bildes, das einem ersten Bild des Untersatzes entspricht, wobei die Beschilderungsregion durch die eines zweiten Bildes des Untersatzes ersetzt wurde, und Zugehören der Kennzeichnung des zweiten Bildes zu dem synthetischen POI-Bild;
        (a4) Bereitstellen eines endgültigen Satzes von POI-Bildern, der den anfänglichen Satz von POI-Bildern und jedes erzeugte synthetische POI-Bild enthält, als Basis von Trainingsbildern;

(b) Erzeugen einer Vielzahl von Drillingen von Trainingsbildern aus der Basis von Trainingsbildern durch einen Datenprozessor (11b) eines zweiten Servers (1b), jeder Drilling umfassend ein Paar von verwandten POI-Bildern und ein Paar von nicht verwandten POI-Bildern, wobei zwei POI-Bilder auf der Basis ihrer Kennzeichnungen als verwandt oder nicht verwandt bestimmt werden;
(c) Trainieren, durch den Datenprozessor (11b) des zweiten Servers (1b), aus der Vielzahl von Drillingen, eines CNN vom siamesischen Dreistromtyp.

2. Verfahren nach Anspruch 1, wobei Schritt (a2) das Erhalten einer Sammlung von beschnittenen Beschilderungsbildern umfasst, und Schritt (a3) das Ersetzen der Beschilderungsregion des gegebenen Bildes durch ein zufällig ausgewähltes beschnittenes Beschilderungsbild aus der Sammlung von beschnittenen Beschilderungsbildern umfasst.

3. Verfahren nach Anspruch 2, wobei Schritt (a3) eine affine Verzerrung des ausgewählten beschnittenen Beschilderungsbildes zur Anpassung an Größe und Form der Beschilderungsregion des gegebenen Bildes und anschließend eine Poissonüberblendung umfasst.

4. Verfahren nach einem der Ansprüche 1 bis 3, wobei entweder jedem POI-Bild eine Kennzeichnung zugehört, die den durch das Bild dargestellten POI identifiziert, oder jedem POI-Bild eine Kennzeichnung zugehört, die eine Position und/oder eine Orientierung der Kamera definiert.

5. Verfahren nach Anspruch 4, wobei die Kennzeichnung, die eine Position und/oder eine Orientierung der Kamera definiert, eine 6-Grad-Freiheits-Pose der Kamera ist und wobei Schritt (a1) das Erzeugen des anfänglichen Satzes von POI-Bildern durch Erfassen von geolokalisierten Fotos von POIs unter Einsatz einer Bilderfassungsvorrichtung (3) umfasst.

6. Verfahren nach Anspruch 1, wobei jedes POI-Bild einer Kennzeichnung zugehörig ist, das eine 6-Grad-Freiheits-Pose der Kamera definiert, wobei zwei POI-Bilder als zusammengehörig bestimmt werden, wenn sie eine geometrische Überlappung über einem ersten Schwellenwert aufweisen, und als nicht zusammengehörig, wenn sie eine geometrische Überlappung unter einem zweiten Schwellenwert aufweisen, basierend auf ihrer jeweiligen 6-Grad-Freiheits-Pose der Kamera.

7. Verfahren nach Anspruch 6, wobei die geometrische Überlappung zwischen zwei Bildern als Überschneidung zwischen Sätzen von Korridorumrissen berechnet wird, die jeweils in jedem der beiden Bilder sichtbar sind.

8. Verfahren nach einem der Ansprüche 1 bis 7, wobei mindestens ein Drilling als Paar von nicht zusammenhängenden POI-Bildern ein synthetisches Bild und das erste Bild, aus dem das synthetische Bild erzeugt wurde, umfasst.

9. Verfahren zum Erkennen einer Änderung eines Interessenpunkts (POI) in einem Paar eingegebener POI-Bilder, wobei eine POI-Änderung dem Ersetzen eines POI an einer bestimmten Stelle durch einen anderen über einen Zeitraum entspricht, der durch das Paar eingegebener POI-Bilder definiert ist, wobei das Verfahren die Umsetzung der folgenden Schritte umfasst:

(b') Berechnen eines Deskriptors des Bildes durch den Datenprozessor (11c) eines dritten Servers (1c) für jedes Bild des Paares von eingegebenen POI-Bildern unter Verwendung eines Stroms des CNN des siamesischen Dreistromtyps, der durch das Verfahren nach einem der Ansprüche 1 bis 8 trainiert wurde;
(c') Erkennen einer POI-Änderung durch den Datenprozessor (11c) des dritten Servers (1c) basierend auf einer Ähnlichkeitswertfunktion der berechneten Deskriptoren.

10. Verfahren nach Anspruch 9, wobei die Bilder eines Paares von eingegebenen POI-Bildern dieselbe Stelle zu zwei verschiedenen Zeitstempeln erfassen.

11. Verfahren nach Anspruch 10, das für eine Vielzahl von Paaren eingegebener Bilder durchgeführt wird, die aus zwei gegebenen Datensätzen geolokalisierter Bilder, die zu zwei unterschiedlichen Zeitpunkten aufgenommen wurden, über einen gegebenen Bereich gewonnen wurden.

12. Computerprogrammprodukt, das Codeanweisungen enthält, um ein Verfahren nach einem der Ansprüche 1 bis 11 zum Trainieren eines Faltungsneuronalen Netzwerks, CNN, oder zum Erkennen einer Änderung eines Interessenpunkts, POI, in einem Paar eingegebener POI-Bilder auszuführen, wenn das Programm auf einem Computer ausgeführt wird.

13. Computerlesbares Medium, auf dem ein Computerprogrammprodukt gespeichert ist, das Codeanweisungen zum Ausführen eines Verfahrens nach einem der Ansprüche 1 bis 11 zum Trainieren eines Faltungsneuronalen Netzwerks, CNN, oder zum Erkennen einer Änderung eines Interessenpunkts, POI, in einem Paar eingegebener POI-Bilder umfasst.

## Revendications

1. Méthode d'entraînement d'un réseau neuronal convolutionnel, CNN, pour la détection d'un changement de point d'intérêt, POI, dans une paire d'images de POI saisies, dans laquelle un changement de POI correspond au remplacement d'un POI à un emplacement particulier par un autre sur une période de temps définie par la paire d'images de POI saisies ; la méthode comprend la mise en oeuvre des étapes suivantes :

   (a) générer, par un processeur de données (11a) d'un premier serveur (1a), une base d'images d'entraînement, dans laquelle ladite génération comprend :

      (a1) obtention d'un ensemble initial d'images de POI étiquetées ;
      (a2) pour chaque image d'un sous-ensemble de l'ensemble initial, identifier une zone de signalisation dans cette image, cette zone de signalisation représentant une caractéristique visuelle clé d'un point d'intérêt représenté par l'image, cette caractéristique visuelle clé d'un point d'intérêt étant un nom et/ou un logo du point d'intérêt, la zone de signalisation étant identifiée par reconnaissance optique de caractères et/ou par détection de logo ;
      (a3) générer au moins une image synthétique de POI correspondant à une première image dudit sous-ensemble dans laquelle la région de signalisation a été remplacée par celle d'une deuxième image dudit sous-ensemble, et associer à cette image synthétique de POI l'étiquette de la deuxième image ;
      (a4) fournir comme base d'images d'entraînement un ensemble final d'images de POI comprenant l'ensemble initial d'images de POI et chaque image de POI synthétique générée ;

   (b) générer, par un processeur de données (11b) d'un second serveur (1b), plusieurs triplets d'images d'entraînement à partir de la base d'images d'entraînement, chaque triplet comprenant une paire d'images de POI liées et une paire d'images de POI non liées, deux images de POI étant déterminées comme étant liées ou non sur la base de leurs étiquettes ;
   (c) former, par le processeur de données (11b) du second serveur (1b), à partir de ladite pluralité de triplets, un CNN du type siamois à trois flux.

2. Procédé selon la revendication 1, dans lequel l'étape (a2) consiste à obtenir une collection d'images de signalisation recadrées, et l'étape (a3) consiste à remplacer la région de signalisation de l'image donnée par une image de signalisation recadrée choisie au hasard dans ladite collection d'images de signalisation recadrées.

3. Procédé selon la revendication 2, dans lequel l'étape (a3) comprend une déformation affine de l'image de signalisation recadrée choisie pour l'adapter à la taille et à la forme de la région de signalisation de l'image donnée, puis un mélange de Poisson.

4. Procédé selon l'une des revendications 1 à 3, dans lequel chaque image de POI est associée à une étiquette identifiant le POI représenté par l'image, ou chaque image de POI est associée à une étiquette définissant une position et/ou une orientation de la caméra.

5. Procédé selon la revendication 4, dans lequel l'étiquette définissant une position et/ou une orientation de la caméra est une pose à 6 degrés de liberté de la caméra et dans lequel l'étape (a1) consiste à générer ledit ensemble initial d'images de POI en acquérant des photographies géolocalisées de POI à l'aide d'un dispositif d'acquisition d'images (3).

6. Méthode selon la revendication 1, dans laquelle chaque image de POI est associée à une étiquette définissant une position à 6 degrés de liberté de la caméra, deux images de POI étant considérées comme liées si elles présentent un chevauchement géométrique supérieur à un premier seuil et comme non liées si elles présentent un chevauchement géométrique inférieur à un second seuil, sur la base de leur position respective à 6 degrés de liberté de la caméra.

7. Procédé selon la revendication 6, dans lequel le chevauchement géométrique entre deux images est calculé comme l'intersection sur l'union entre les ensembles de contours de couloirs respectivement visibles dans chacune des deux images.

8. Procédé selon les revendications 1 à 7, dans lequel au moins un triplet comprend, en tant que paire d'images de POI non liées, une image synthétique et la première image à partir de laquelle cette image synthétique a été générée.

**9.** Méthode de détection d'un changement de point d'intérêt (POI) dans une paire d'images de POI saisies, dans laquelle un changement de POI correspond au remplacement d'un POI à un emplacement particulier par un autre sur une période définie par la paire d'images de POI saisies, la méthode comprend la mise en oeuvre des étapes suivantes :

(b') calculer, par le processeur de données (11c) d'un troisième serveur (1c), pour chaque image de la paire d'images de POI saisies, un descripteur de l'image en utilisant un flux du CNN du type siamois à trois flux entraîné par le procédé selon l'une quelconque des revendications 1 à 8 ;
(c') détection, par le processeur de données (11c) du troisième serveur (1c), d'un changement de POI sur la base d'une fonction de score de similarité des descripteurs calculés.

**10.** Méthode selon la revendication 9, dans laquelle les images d'une paire d'images de POI saisies capturent le même emplacement à deux moments différents.

**11.** Méthode selon la revendication 10, exécutée pour une pluralité de paires d'images saisies, obtenues à partir de deux ensembles donnés d'images géolocalisées capturées à deux moments différents, sur une zone donnée.

**12.** Produit de programme informatique comprenant des instructions de code pour exécuter une méthode selon l'une des revendications 1 à 11 pour entraîner un réseau neuronal convolutionnel, CNN, ou pour détecter un changement de point d'intérêt, POI, dans une paire d'images de POI saisies, lorsque ledit programme est exécuté sur un ordinateur.

**13.** Support lisible par ordinateur, sur lequel est stocké un produit de programme informatique comprenant des instructions de code pour l'exécution d'une méthode selon l'une des revendications 1 à 11 pour l'entraînement d'un réseau neuronal convolutionnel, CNN, ou pour la détection d'un changement de point d'intérêt, POI, dans une paire d'images de POI saisies.

**FIG. 1**

FIG. 2

**FIG. 3**

**FIG. 4a**

FIG. 4b

**FIG. 5a**

**FIG. 5b**

**FIG. 5c**

**FIG. 6**

**FIG. 7a**

**FIG. 7b**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10007863 B1

**Non-patent literature cited in the description**

- **ALBERT GORDO ; JON ALMAZÁN ; JEROME REVAUD ; DIANE LARLUS.** End-to-end learning of deep visual representations for image retrieval. *International Journal of Computer Vision,* September 2017, vol. 124 (2), 237-254
- **PIERRE MOULON, ; PASCAL MONASSE ; RENAUD MARLET.** Global fusion of relative motions for robust, accurate and scalable structure from motion. *In Proceedings of the IEEE International Conference on Computer Vision,* 2013, vol. 12
- **ALBERT GORDO, ; JON ALMAZÁN ; JEROME REVAUD ; DIANE LARLUS.** End-to-end learning of deep visual representations for image retrieval. *International Journal of Computer Vision,* September 2017, vol. 124 (2), 237-254
- Synthetic Data for Text Localisation in Natural Images. **GUPTA ANKUSH et al.** 2016 IEEE CONFERENCE ON COMPUTER VISION AND PATTERN RECOGNITION (CVPR). IEEE, 27 June 2016
- **JÉRÔME REVAUD ; MATTHIJS DOUZE ; CORDELIA SCHMID.** Correlation-Based Burstiness for Logo Retrieval. *InMM 2012 - ACM International Conference on Multimedia,* 2012
- **M. AFIFI ; K. F. HUSSAIN.** Mpb: A modified poisson blending technique. *In SIGGRAPH,* 2003
- **PIERRE MOULON ; PASCAL MONASSE ; RENAUD MARLET.** Global fusion of relative motions for robust, accurate and scalable structure from motion. *In Proceedings of the IEEE International Conference on Computer Vision,* 2013, vol. 12